Europäisches Patentamt

European Patent Office

Office européen des brevets

(11) Veröffentlichungsnummer: **0 171 472**

**A1**

(12) # EUROPÄISCHE PATENTANMELDUNG

(21) Anmeldenummer: **84201964.8**

(22) Anmeldetag: **13.07.84**

(51) Int. Cl.⁴: **G 01 P 3/495**

(43) Veröffentlichungstag der Anmeldung:
**19.02.86 Patentblatt 86/8**

(84) Benannte Vertragsstaaten:
**FR GB NL SE**

(71) Anmelder: **VDO Adolf Schindling AG**
**Gräfstrasse 103**
**D-6000 Frankfurt/Main(DE)**

(72) Erfinder: **Sudler, Roland**
**Grosse Seestrasse 8**
**D-6000 Frankfurt/Main(DE)**

(72) Erfinder: **Lindig, Christian**
**Rossertstrasse 5a**
**D-6233 Kelkheim/Ts. 4(DE)**

(72) Erfinder: **Gräbner, Matthias**
**Im Mühlengrund 25**
**D-6368 Bad Vilbel 3(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Elektrischer Geschwindigkeits- und Wegstreckenmesser für Fahrzeuge.**

(57) In einem elektrischen Geschwindigkeits- und Wegstreckenmesser für Fahrzeuge sind ein Dauermagent (13) als Rotor und eine den Rotor umfassende Wirbelstromglocke (9) konzentrische drehbar angeordnet. Zur Erzeugung eines Drehfelds sind drei Spulen (6, 7, 8) in einem Stator vorgesehen, die von einem Impulsgeber (1-5) mit fahrzeuggeschwindigkeitsabhängiger Frequenz gespeist werden. Um den Geschwindigkeits- und Wegstreckenmesser auch möglichst genau und kontinuierlich ohne aufwendige Dämfungsmaßnahmen zu betreiben, ist der Impulsgeber zur Erzeugung von drei die Spulen beaufschlagenden treppenförmigen Spannungspulsen eingerichtet, die eine zu einer Spannung Null symmetrische Sinusform annähern und um 120° phasenverschoben sind. Die Annäherung erfolgt mit 3n Stufen pro 90 Winkelgrad, wobei n eine ganze Zahl ist.

./...

Fig. 7

0171472

VDO Adolf Schindling AG    - 1 -    6000 Frankfurt/Main
Gräfstraße 103

<u>Elektrischer Geschwindigkeits- und Wegstreckenmesser</u>
<u>für Fahrzeuge</u>

Die Erfindung betrifft einen elektrischen Geschwindigkeits-
und Wegstreckenmesser für Fahrzeuge nach dem Oberbegriff
des Anspruchs 1.

Diese elektrischen Geschwindigkeits- und Wegstreckenmesser
gehören zu der Gattung der sogenannten E-Tachos, deren
grundsätzlicher Vorteil darin besteht, statt über eine
flexible Welle ("Flexwelle") über freizügig zu verlegende
elektrische Leitungen mit einem Geber verbunden zu sein.

Ein bekannter elektrischer Geschwindigkeits- und Wegstreckenmesser für Fahrzeuge der eingangs genannten Gattung besteht
im wesentlichen aus drei im Dreieck geschalteten, von einem
Drehstromgenerator als Geber gespeisten Spulen, in deren
Drehfeld ein Magnet sowie gleichachsig mit ihm eine Wirbelstromglocke eines Tachometers drehbar angeordnet sind. Das
Drehfeld erzeugt in Verbindung mit dem Magneten ein so großes
Drehmoment, daß das Zählwerk eines Wegstreckenmessers über ein
Schneckengetriebe angetrieben wird. Die Wirbelstromglocke
wird ebenfalls unter der Wirkung des Drehfeldes mitgenommen
und entgegen der Kraft einer Feder um einen der Geschwindigkeit des Fahrzeuges proportionalen Winkel ausgelenkt. Dabei
ist die Auslenkung durch den Magneten des Motors unterstützt.

Als einfache Form des Gebers wird statt des mit dem Getriebe des Fahrzeugs gekuppelten Drehstromgenerators ein dreiphasiger Kontaktgeber verwendet, der folgendermaßen aufgebaut ist: Zwei gegeneinander isolierte Schleifringe auf einer Welle sind über je eine Kontaktbürste mit je einem Pol der Fahrzeugbatterie als Gleichspannungsquelle verbunden. Jeder Schleifring steht mit einem weiteren Schleifkontakt in elektrischer Verbindung. Die beiden Schleifkontakte sind an den Enden zweier um 180° gegeneinander versetzter Arme auf der Welle angeordnet und schleifen auf einer dreiteiligen Segmentscheibe. Von jedem Segment der Segmentscheibe wird ein Puls·. zur Einspeisung in die drei im Dreieck geschalteten Spulen erzeugt (DE-GBM 1 610 729).

Es hat sich herausgestellt, daß dieser elektrische Geschwindigkeits- und Wegstreckenmesser zwar in der beabsichtigten und beschriebenen Weise bei Speisung durch Drehstromgeneratoren funktioniert, nicht aber mit der angegebenen einfachen dreiphasigen Kontaktvorrichtung. Die Drehstromspeisung erfordert nicht nur relativ teure Geber, sondern hat auch den grundsätzlichen Nachteil, daß der Geschwindigkeits- und Wegstreckenmesser nicht für jedes Weginkrement proportional angetrieben wird, sondern kontinuierlich läuft. Bei einer Einspeisung von Impulsen aus dem einfachen Kontaktgeber kommt hingegen kein Drehfeld zustande, welches bei einer eisenlosen Ausführung des Geschwindigkeits- und Wegstreckenmessers, wie zum Stand der Technik vorgesehen, einen eindeutigen Anlauf in einer Richtung bewirkt: Die bekannte Kontaktvorrichtung erzeugt in jeder von drei Phasen für drei Zuleitungen zu den Spulen unipolare Pulse, die durch eine konstante Pulshöhe über 180 elektrische Grad (bezogen auf die Pulsfrequenz) gekennzeichnet sind. Die drei Phasen sind dabei in üblicher Weise um je 120° gegeneinander verschoben.

Daraus ergibt sich, daß jeweils zwei Spulen erregt sind, während die dritte Spule keinen Beitrag zur Erregung liefert. Ein gleichmäßiges Drehfeld wird damit nicht gebildet, und es sind ungleichmäßige Schrittwinkel sowie beim Anlaufen Resonanzstellen bzw. ein außer Tritt fallen des Motors festgestellt worden.

Diese Nachteile könnten zwar dadurch weitgehend beseitigt werden, daß die Spulen auf Polschuhen großer magnetischer Leitfähigkeit angeordnet sind, die mit einem ebenso magnetisch leitenden Rückschluß verbunden sind. Ein solcher Aufbau des Geschwindigkeits- und Wegstreckenmessers ist aber nicht ohne weiteres für höhere Geberfrequenzen realisierbar und zumindest aufwendig.

Zu der vorliegenden Erfindung gehört daher die Aufgabe, einen elektrischen Geschwindigkeits- und Wegstreckenmesser für Fahrzeuge der eingangs genannten Gattung ohne Polschuhe und magnetischen Rückschluß und mit einer einfachen Ausbildung des Gebers zur Erzeugung der in die Spulen eingespeisten Pulse so weiter zu entwickeln, daß trotzdem ein gleichmäßiges Drehfeld erzeugt wird, bei dem sich konstante Schrittwinkel auch bei Hochlauf des Magneten einstellen. Insbesondere soll ein außer-Tritt-Fallen des Magneten während des Hochlaufs sicher vermieden werden.

Diese Aufgabe wird durch die in dem kennzeichnenden Teil des Anspruchs 1 angegebene Erfindung speziell gelöst.

Eine allgemeinere Lösung ist in dem kennzeichnenden Teil des Anspruchs 4 angegeben.

Bei der speziellen Lösung gehört zum Betrieb des Geschwindigkeits- und Wegstreckenmessers ein Impulsgeber, der unterschiedliche Impulshöhen nach jeweils 60 elektrischen Grad und unterschiedliche Pulspolarität nach jeweils 180 Grad erzeugt. Beispielsweise beginnt der Puls für die Phase 1 mit dem halben Höchstwert, steigt nach 60 Grad auf den Höchstwert und fällt nach 120 Grad wiederum auf den halben Höchstwert ab. Zwischen 180 Grad und 240 Grad kehrt sich die Polarität des Pulses auf den halben negativen Höchstwert um. Von 240 - 300 Grad stellt sich der negative Höchstwert ein, der ab 300 Grad auf den halben negativen Höchstwert abfällt, bis ab 360 Grad der beschriebene Pulsverlauf von vorne beginnt. Die Pulse für die zweite und dritte Phase sind gegenüber dem geschilderten Puls jeweils um 120° verschoben. Durch die Speisung der Spulen mit diesen Impulsen wird in jeweils zwei Spulen eine Magnetisierung in der gleichen Richtung und des gleichen Betrags erzeugt, während in der dritten Spule die Magnetisierung den doppelten Betrag, aber in umgekehrter Richtung annimmt. Dadurch ist die Magnetisierung in jeweils einer Spule hervorgehoben, und zwar nacheinander für alle Spulen in der Art eines Drehfeldes. Diese Impulse lassen sich durch elektronische Schaltungsanordnungen mit geringem Aufwand aus den üblichen Weginkrementimpulsen erzeugen. Sie ergeben sechs definierte Stellungen des Wegstreckenmessers, der somit als Schrittmotor wirkt. Damit werden exakte Messungen der Wegstrecke in einer einfachen Anordnung erzielt, die zudem die gleichzeitige Erfassung der Geschwindigkeit ermöglicht.

Die Impulse zur Speisung der in Sternschaltung angeordneten Spulen werden in wenig aufwendiger Weise mit drei Transistorbrückenschaltungen nach Anspruch 2 erzeugt. Jede Transistorbrückenschaltung enthält dabei zwei in Reihe geschaltete Transistoren, und zwar einen n-p-n-Transistor und einen p-n-p-Transistor. Jeweils einer dieser beiden Transistoren einer Transistorbrückenschaltung wird leitend gesteuert, und zwar die Transistoren zweier Brückenschaltungen jeweils in gleicher Weise. Dadurch speisen je zwie Brückenschaltungen einen einfachen Strom in die Spulen ein, während ein Transistor der dritten Schaltung den doppelten Strom durch die dritte Spule leitet.

Zur Ansteuerung der Transistorbrückenschaltungen ist eine Motorschaltlogikanordnung vorgesehen, die die Transistoren in einer solchen Abfolge leitend steuert, daß sich das geschilderte Drehfeld einstellt. Auch die Motorlogikschaltungsanordnung ist wenig aufwendig und kann im einzelnen zweckmäßig mit einem sechsstufigen Ringzähler aufgebaut sein, der die Steuerzeitabschnitte über jeweils 60 elektrische Grad bildet.

Bei der allgemeinen Lösung nach Anspruch 4, um mit drei in einem Stator angeordneten Spulen, die im Stern oder Dreieck geschaltet sein können, ein Drehfeld zu erzeugen, werden die die Spulen beaufschlagenden treppenförmigen Spannungspulse in Form einer angenäherten, zu einer Spannung Null symmetrischen Sinusform durch einen elektronischen Pulsgenerator erzeugt bzw. synthetisiert. Dies geschieht in der Weise, daß mit 3n Stufen pro 90 Winkelgrad ein Teil der Sinusform angenähert wird, wobei n eine ganze Zahl ist. Damit können die drei Spannungspulse zur Speisung der drei Spulen einfach und exakt gegeneinander um je 120° phasenverschoben werden.

Es hat sich herausgestellt, daß für einen befriedigend kontinuierlichen Lauf des Rotors insbesondere bei einer Dreieckschaltung der Statorspulen der Impulsgeber in wenig aufwendiger Weise so aufgebaut sein kann, daß er treppenförmige Spannungsimpulse erzeugt, welche die Sinusform mit 6 Stufen pro 90 Winkelgrad annähern.

Bessere Annäherungen an die Sinusform mit 9 oder 12 oder 15 Stufen pro 90-Winkelgrad können elektronisch immer noch mit vergleichsweise wenig aufwendigen Mitteln im Vergleich zu einem Drehstromgenerator erzeugt werden. Mit diesen synthetisierten treppenförmig-sinusförmigen Spannungspulsen lassen sich aber praktisch die gleichen Betriebseigenschaften des Motors erzielen, wie bei einer Speisung aus einem aufwendigen Meß-Drehstromgenerator.

Die Endstufen zum Speisen der Spulen des Stators sind zweckmäßig nach Anspruch 9 als durch den Impulsgeber analog ansteuerbare Transistorbrückenschaltungen aufgebaut, über welche die Spulen jeweils mit einem Pol der zweipoligen Gleichspannungsquelle entsprechend der treppenförmigen Sinusform beaufschlagbar sind.

Bei einer Dreieckschaltung der Spulen können diese bei sonst gleicher Dimensionierung mit gegenüber einer Sternschaltung vergleichsweise niedriger Spannung betrieben werden, die zwischen den Eckpunkten der Dreieckschaltung angelegt wird. Dadurch lassen sich die Endstufen mit weniger aufwendigen Transistoren ausrüsten.

Um auch bei niedrigen Frequenzen des Weginkrementpulses einen unruhigen Lauf des Rotors zu vermeiden, wird besonders vorteilhaft eine frequenzabhängige Spannungssteuerung der Spannungspulse nach Anspruch 10 vorgesehen. Dadurch wird ein Drehmomentüberschuß bei niedriger Frequenz des Weginkrementpulses vermieden, der sonst eine unregelmäßig hin und her gehende Anzeige eines mit dem Wirbelstromsystem verbundenen Zeigers hervorrufen kann, wenn das Fahrzeug mit niedriger Geschwindigkeit fährt. Durch die erfindungsgemäße Maßnahme ist auch vermieden, daß die Anzeige an bestimmten Stellen auf der Skala bzw. bei bestimmten Geschwindigkeiten sprunghaften Änderungen unterliegt, die störend wirken können.

Dies geschieht dadurch, daß zur Speisung der Spulen des Rotors Spannungspulse erzeugt werden, deren Amplitude - bei gleichbleibender Kurvenform - mit steigender Frequenz des Weginkrementpulses wächst, so daß der Spulenstrom trotz steigender Frequenz annähernd konstant bleibt. Somit läßt sich der elektrische Geschwindigkeits- und Wegstreckenmesser so dimensionieren, daß auch bei hoher Frequenz des Weginkrementpulses ein genügend hohes Drehmoment des Rotors erzeugt wird, um eine genaue Anzeige bzw. Messung zu gewährleisten,ohne bei niedriger Frequenz der Weginkrementpulse einen unerwünschten Drehmomentüberschuß gegenüber dem ansteigenden Drehmoment des Wirbelstromsystems zu erzeugen. - Außer den geschilderten Vorteilen läßt sich die stetige frequenzabhängige Steuerung der Amplitude der Spannungspulse mit verhältnismäßig wenig aufwendigen Mitteln, einem integrierten Schaltkreis, realisieren, der die Endstufen zur Speisung der Spulen analog ansteuert.

Damit der Magnet des Rotors auch unter ungünstigsten Bedingungen nicht außer Schritt fällt, kann zweckmäßig zusätzlich die Maßnahme nach Anspruch 11 vorgesehen werden. Damit wird sichergestellt, daß der Wegstreckenmesser für höchste Anforderungen auch dann einwandfrei hochläuft, wenn beispielsweise die Weginkrementimpulsfrequenz 50 Hertz überschreitet und eine Unterbrechung eintritt. Unterbrechungen können beispielsweise durch Blockieren von Fahrzeugrädern bei Notbremsungen entstehen oder aber, wenn versehentlich im Betrieb des Fahrzeuges die Gleichspannungsquelle unterbrochen wird.

Zur Vermeidung eines unruhigen Rotorlaufs bei niedrigen Frequenzen des Weginkrementpulses kann statt der besonders vorteilhaften Ausgestaltung nach Anspruch 12 eine Strombegrenzung der Pulse, die in die Spulen eingespeist werden, vorgesehen sein. Damit wird vermieden, daß bei niedrigen Frequenzen bis ca. 10 Hertz Drehmomentüberschüsse entstehen und der Rotor in starke Schwingungen gerät.

Wegen des Einflusses des Rotors auf die Wirbelstromglocke wird dadurch auch ein Zeigerzappeln vermieden.

Obwohl die Erfindung besonders vorteilhaft für eisenlose Systeme der Spulenanordnung eingesetzt wird, ist sie nicht auf Systeme ohne jeden magnetischen Rückschluß beschränkt. Vielmehr kann nach Anspruch 13 vorteilhaft ein Wirbelstromrückschlußring im Abstand zu den Spulen vorgesehen sein, der den elektrischen Geschwindigkeits- und Wegstreckenmesser gegenüber benachbarten Systemen abschirmt.

Die Erfindung wird im folgenden anhand einer Zeichnung mit 13 Figuren erläutert. Es zeigen:

Fig. 1    eine vereinfachte schaubildliche Darstellung des elektrischen Geschwindigkeits- und Wegstreckenmessers;

Fig. 2    eine Variante der Motoranordnung nach Fig. 1;

Fig. 3    ein Blockschaltbild der Gesamtanordnung in einer zweiten Ausführungsform;

Fig. 4    Brückenendstufen als Transistorbrückenschaltung;

Fig. 5    ein Diagramm der erzeugten Pulse für die Motoranordnung;

Fig. 6 das Motor- und Wirbelstromdrehmoment in Abhängigkeit von der Weginkrementfrequenz;

Fig. 7 eine Abwandlung des Blockschaltbilds nach Figur 3;

Fig. 8 Brückenendstufen für die Spulen des Stators in Dreieckschaltung;

Fig. 9a, b, c, d Diagramme der treppenförmigen Spannungspulse, die eine symmetrische Sinusform annähern, und

Fig. 10 die in die Dreieckschaltung der Spulen gespeiste Spannung, der Spulenstrom, das Motordrehmoment und das Wirbelstromdrehmoment in Abhängigkeit von der Weginkrementfrequenz.

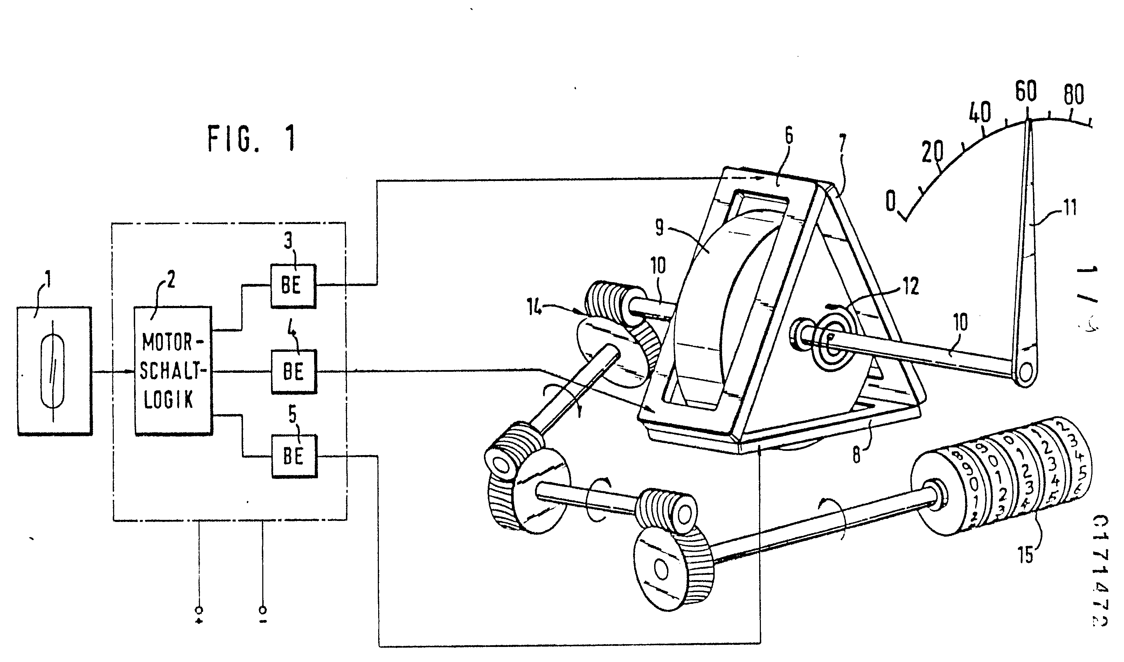

In Figur 1 ist als Bestandteil eines Gebers 1 von Weginkrementimpulsen ein Schutzrohrkontakt dargestellt. Die Weginkrementimpulse werden in eine Motorschaltlogik 2 eingespeist, die drei Brückenendstufen 3, 4, 5 zur Erzeugung von Pulsen steuert.

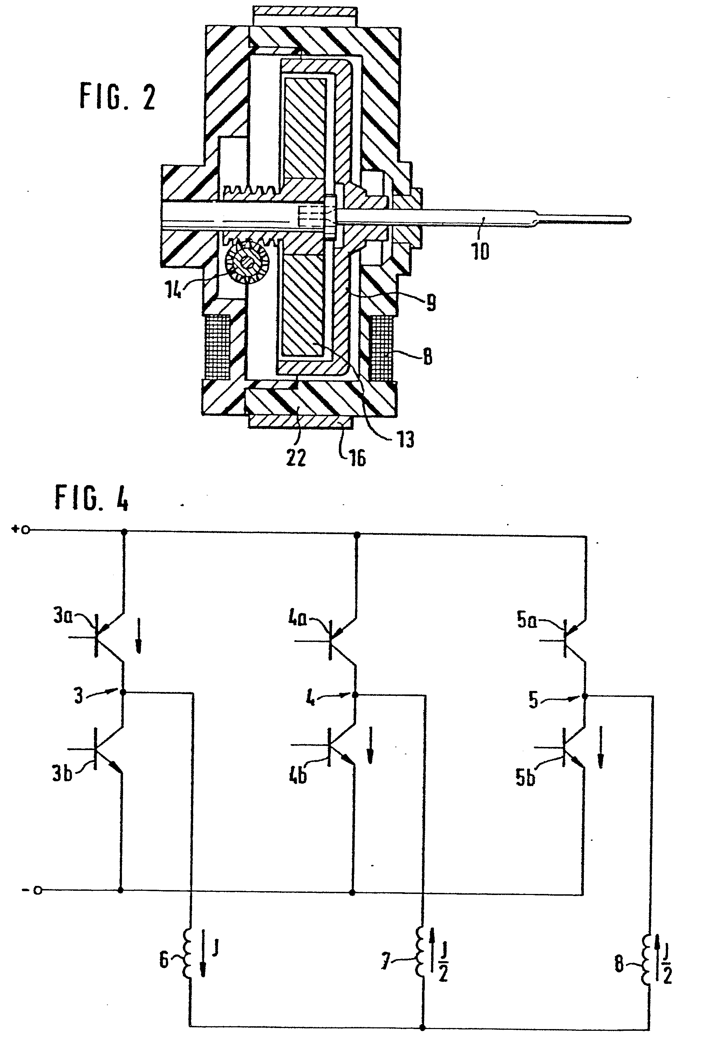

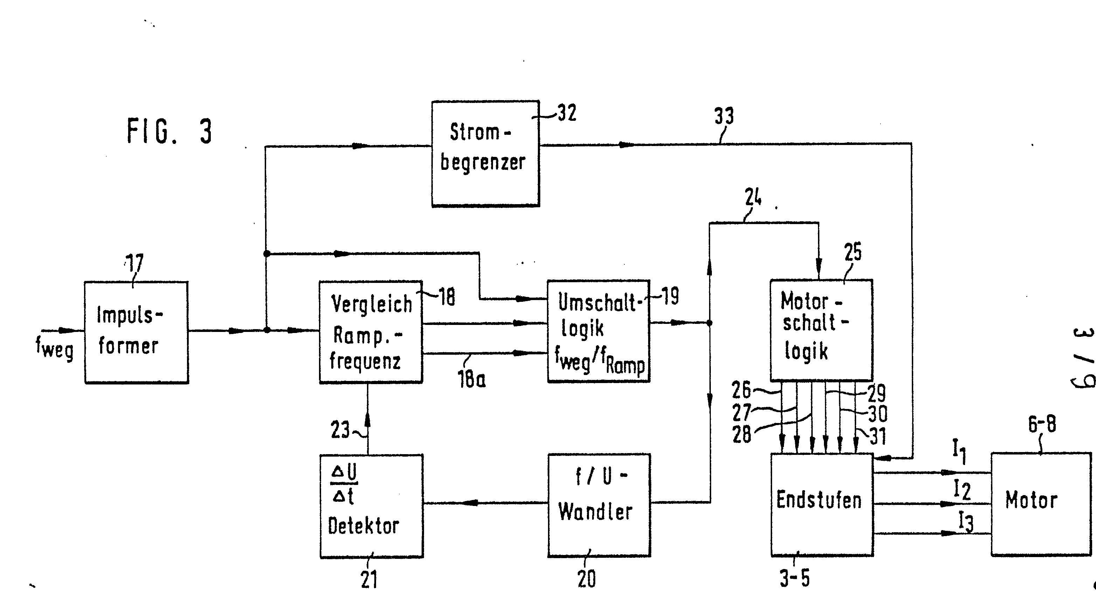

Die in noch zu beschreibender Weise erzeugten Pulse werden in drei im Stern geschalteten Spulen 6, 7, 8 der Motor- und Wirbelstromanordnung eingespeist. Die Motor- und Wirbelstromanordnung umfaßt eine Wirbelstromglocke 9, siehe auch Fig. 2, die über eine Welle 10 einen Geschwindigkeitszeiger 11 entgegen der Kraft einer Feder 12 auslenkt.

Ein koaxial zu der Welle 10 gelagerter Magnet 13 als Rotor treibt über eine Schnecke 14 und weitere nicht bezeichnete Getriebeelemente ein Rollenzählwerk 15 an.

Die Motor- und Wirbelstromanordnung nach Fig. 1 ist also eisenlos, d.h. ohne Polschuhe und magnetischen Rückschluß ausgebildet.

In der Ausführungsform nach Fig. 2 ist dargestellt, wie die Spule 8 auf ein Gehäuse 22 aus Kunststoff gewickelt ist. Zusätzlich ist in der Ausführungsform nach Fig. 2 noch ein die Wirbelstromglocke nach außen abschirmender Rückschlußring 16 vorgesehen.

In der Gesamtanordnung der elektronischen Schaltung nach Fig. 3 ist eine Eingangsschaltung zur Impulsaufbereitung mit 17 bezeichnet. In einem PLL Baustein 18 wird eine Frequenzrampe zum Beschleunigen der Motoranordnung aus dem Stillstand oder aus niedriger Schrittgeschwindigkeit gebildet. Außerdem wird in diesem Baustein die Frequenz der Weginkrementimpulse mit derjenigen der Frequenzrampe verglichen. Eine Steuerleitung 18a bestimmt in Verbindung mit einer Umschaltlogik 19, ob die Weginkrementimpulse oder die aus der Frequenzrampe abgeleiteten Impulse als Steuerfrequenz verwendet wird. Die Steuerfrequenz wird in einem Erkennungsteil mit einem Frequenz/Spannungswandler 20 und einem Spannungsänderungs-Detektor 21 ausgewertet. Das Ergebnis der Auswertung steuert über eine Leitung 23 den Vergleich der Weginkrementimpulse mit der Frequenzrampe.

Die Steuerfrequenz, die entweder die Weginkrementfrequenz oder eine Frequenz der Frequenzrampe ist, wird über eine Leitung 24 in eine Motorschaltlogik 25 eingespeist. Die Motorschaltlogik umfaßt insbesondere einen sechsstufigen Ringzähler, der für jeden Impuls der Steuerfrequenz um eine Stufe weitergeschaltet wird. Ein Zählzyklus des Ringzählers wird also mit sechs Steuerfrequenzimpulsen durchlaufen. Von jeder Stufe des Ringzählers gehen Ansteuerleitungen 26 bis 31 für die Brückenendstufen 3 bis 5 ab.

Die Brückenendstufen sind gemäß Fig. 4 als Transistorbrücken-schaltungen ausgebildet. Es ist aus Fig. 4 ersichtlich, daß zu jeder der Transistorbrückenschaltungen ein p-n-p-Transistor, z.B. 3a und in Reihe zu dessen Emitterkollektorstrecke ein n-p-n-Transistor 3b vorgesehen sind. Es ist aus Fig. 4 ohne weiteres ersichtlich, wie die Brückenmittelpunkte, d.h. die Verbindungen zwischen den beiden Transistoren einer Transistorbrückenschaltung an die in Sternschaltung geschalteten Spulen 6 bis 8 angeschlossen sind.

Zu Fig. 3 ist noch eine Schaltungsanordnung 32 zur Frequenz-abhängigen Strombegrenzung bemerkenswert. Diese Schaltungs-anordnung wird ebenfalls durch die Weginkrementimpulse umgeschaltet, und zwar von einem relativ niedrigen Wert von beispielsweise 70 mA bis 40 Hertz auf einen größeren Wert von beispielsweise 150 mA über 40 Hertz. Dieser Strom wird über eine Leitung 33 in die Endstufen 3 bis 5 eingespeist, um eine Abschwächung des Motordrehmoments bei kleinen Frequenzen und damit eine Dämpfung der Rotorbewegung zu erreichen.

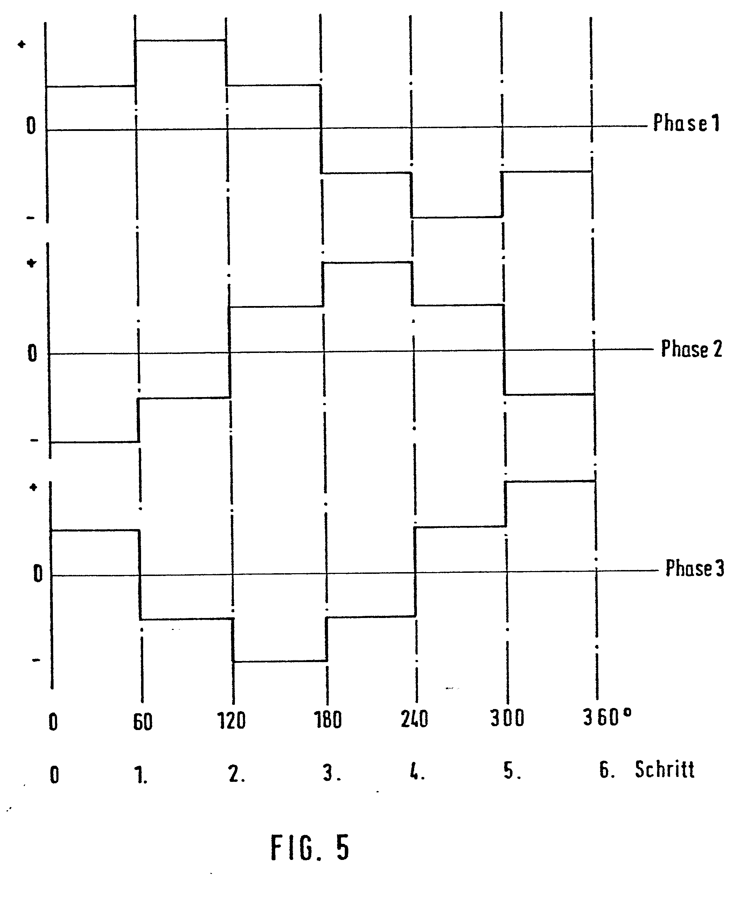

Aus Fig. 5 sind im einzelnen die Kurvenformen und die gegenseitigen phasenmäßigen Beziehungen der Pulse der Phasen 1, 2 und 3 ersichtlich, die mit der Motorschaltlogik 25 und den Endstufen 3 bis 5 - wie in Fig. 4 detaillierter dargestellt - erreicht werden. Beispielsweise wird zu Beginn des ersten Schritts zwischen 60 und 120 elektrischen Grad die Spule 7 ebenso wie die Spule 8 mit jeweils dem halben maximalen Strom in einer negativen Richtung beaufschlagt, da die Transistoren 4b und 5b leiten, während gleichzeitig die Spule 6 von dem vollen maximalen Strom in der positiven Richtung bei leitendem Transistor 3a durchflossen wird. Es erzeugt also, wie aus Fig. 5 weiter ersichtlich, jeweils eine der drei Spulen 6 bis 8 jeweils einen maximalen magnetischen Fluß, dem jeweils der halbe Fluß durch die beiden anderen Spulen gegenübersteht. Es wird so trotz der grobstufigen Kurvenform der Pulse in den Phasen 1, 2 und 3 ein solches Drehfeld in der Motoranordnung sowohl nach Fig. 1 als auch nach Fig. 2 gebildet, daß der Magnet des Rotors um gleichmäßige Schrittwinkel ohne Resonanzstellen oder außer-Tritt-Fallen in der Anlaufphase schrittweise gedreht wird.

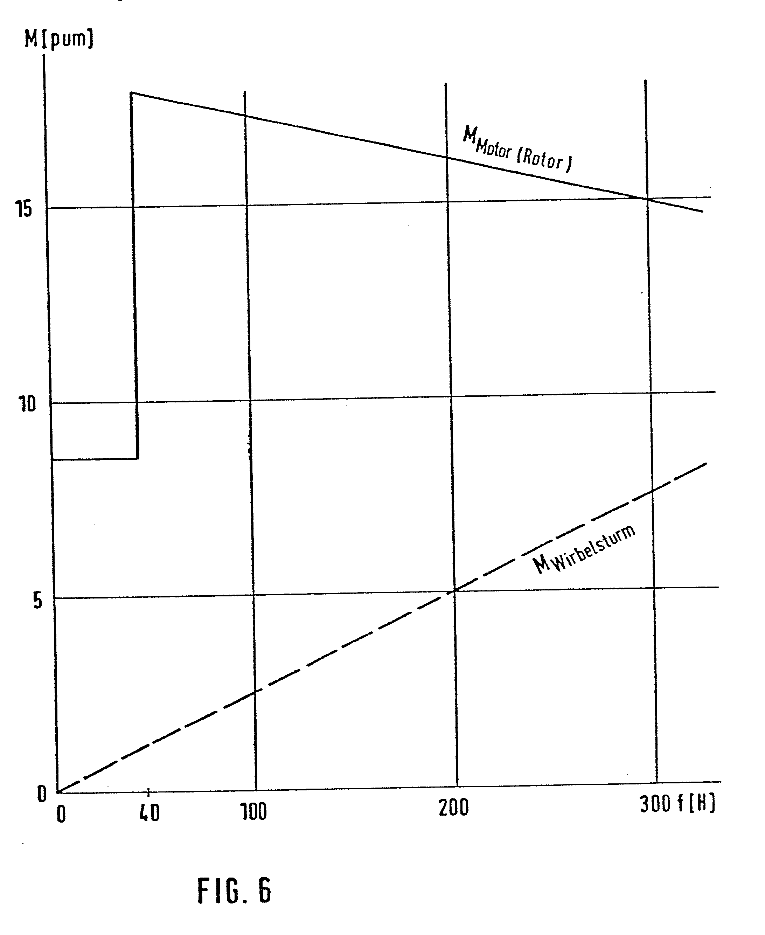

Aus Figur 6 ist ersichtlich, wie das Drehmoment des Rotors mit fallender Frequenz der Weginkrementimpulse zunimmt. Deswegen ist zum Dämpfen mechanischer Schwingungen vorgesehen, daß in dem Bereich von Null bis 40 Hertz der Pulsstrom herabgesetzt wird, so daß sich das Drehmoment reduziert. Das von dem Wirbelstromsystem erzeugte Drehmoment steigt dagegen mit wachsender Frequenz und entsprechend schnell rotierendem Drehfeld an.

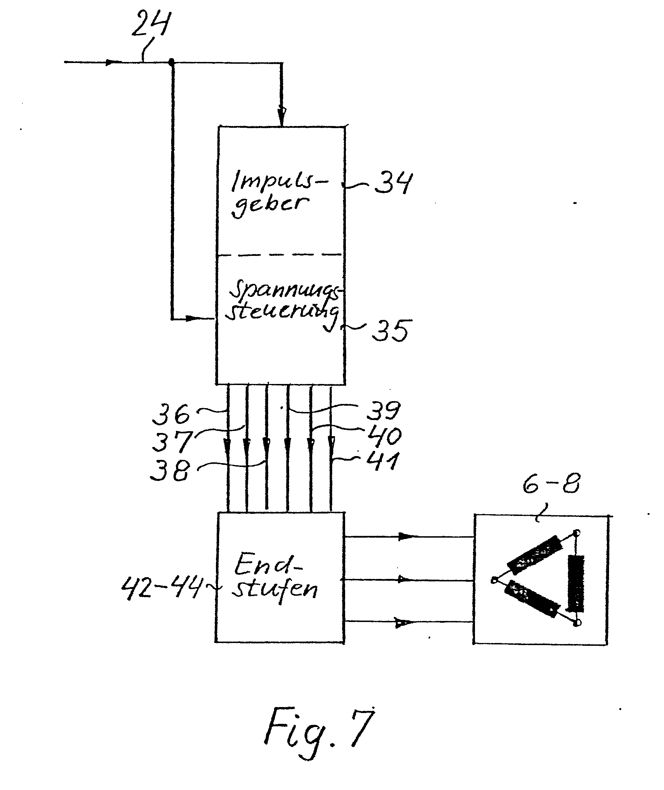

Die Schaltungsvariante nach Figure 7 dient zur Erzeugung treppenförmiger Spannungspulse, die eine zu einer Spannung Null symmetrische Sinusform annähern, um damit dreieckig geschaltete Spulen 6 - 8 des Motors zu beaufschlagen.

Hierzu dient ein Impulsgeber bzw. Impulsgenerator 34, der drei um 120° gegeneinander verschobene angenähert sinusförmige Spannungspulse generiert. Die Synchronisation dieser Pulserzeugung bzw. Frequenzsteuerung erfolgt über die Leitung 24, die gemäß Figur 3 eine Steuerfrequenz führt, welche entweder die Weginkrementfrequenz oder eine Frequenz der Frequenzrampe ist.

In dem integrierten Schaltkreis, der den Impulsgeber 34 umfaßt, folgt außerdem eine frequenzabhängige Spannungssteuerung der generierten Spannungspulse in der Weise, daß die Spannung mit wachsender Steuerfrequenz ansteigt. Der Teil des integrierten Schaltkreises, der die Steuereinrichtung zur dieserart stetigen Steuerung der Amplitude der Spannungspulse umfaßt, ist mit 35 bezeichnet.

Der Impulsgeber 34 und die Steuereinrichtung 35 in der Ausführungsform nach Figur 7 ersetzen also die Motorschaltlogik 25 und den separaten Strombegrenzer 32 in der Ausführungsform nach Figur 3.

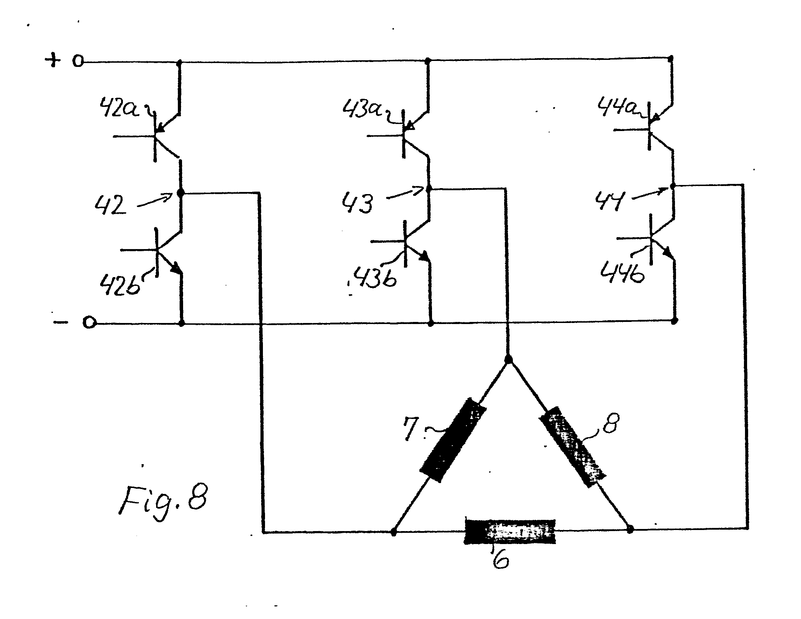

Von der Steuereinrichtung 35 führen Ansteuerleitungen 36 - 41 zu analog ansteuerbaren Endstufen 42 - 44. Diese Endstufen sowie ihre Verbindung mit den im Dreieck geschalteten Spulen des Stators sind im einzelnen in Figur 8 dargestellt:

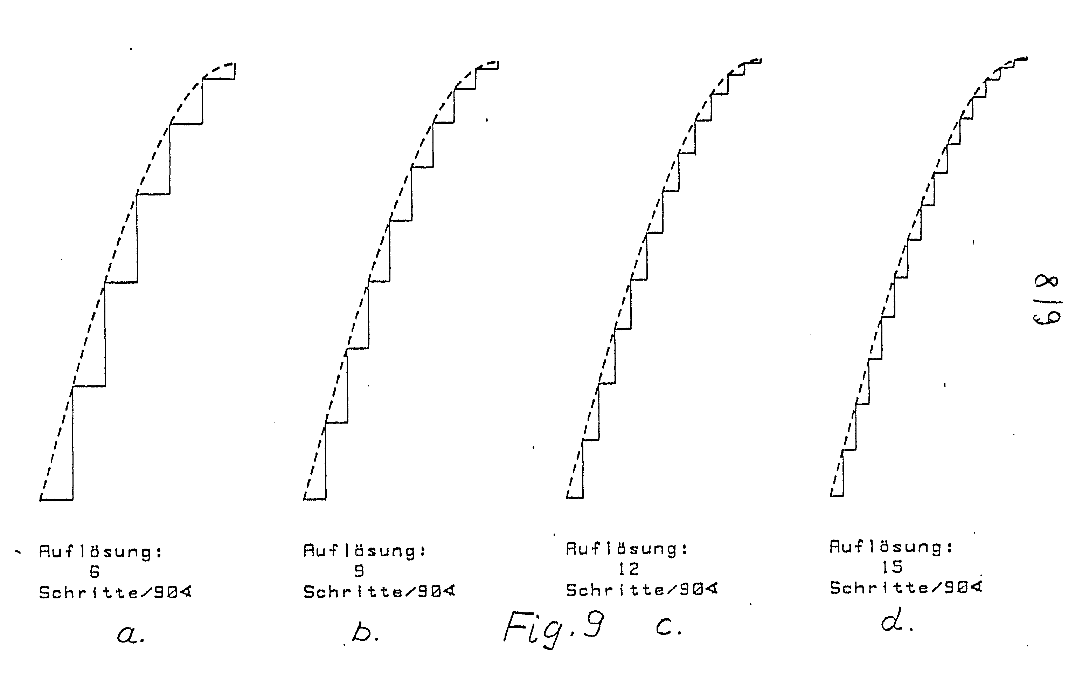

Danach sind die Brückenendstufen 42, 43, 44 als Transistorbrückenschaltungen aufgebaut. Zu jeder Transistorbrückenschaltung gehört ein n-p-n-Transistor z.B. 42a, zu dessen Emitterkollektorstrecke ein n-p-n-Transistor 42b geschaltet ist. Die Brückenmittelpunkte als Verbindungen zwischen den beiden genannten Transistoren jeder Transistorenbrückenschaltung stehen wiederum mit den Eckpunkten der im Dreieck geschalteten Spulen 6, 7 und 8 in Verbindung, wie detailliert in Figur 8 dargestellt ist. Die Endstufen 42 - 44 werden über die Ansteuerleitungen 36 - 41 so angesteuert, daß die drei Spulen 6 - 8 mit um 120° gegeneinander verschobenen treppenförmigen Spannungspulsen symmetrisch zu der Spannung Null beaufschlagt werden, die aus der Betriebsspannung durch die Brückenschaltungen abgezweigt werden. Je 90° der angenähert sinusförmigen Spannungspulse hat dann - je nach Organisation des Impulsgebers 34 - eine abgestufte Kurvenform, wie sie für 90° in Figur 9 der Varianten a, b, c oder d dargestellt ist. Die anzunähernde Sinusform ist darin mit einer unterbrochenen Linie gezeigt. Im Unterschied zu den Brückenendstufen nach Figur 4 werden hier also die Transistoren der Brückenendstufen in der Regel nicht ganz geöffnet oder geschlossen, sondern stellen unterschiedliche Bahnwiderstände dar, um in ihrem Zusammenwirken die abgestuften Spannungen der Spannungspulse zu erzeugen. In den Figuren 9a - d nehmen die Stufen von 6 über 9 und 12 bis 15 zu, um die Sinusform mit zunehmend besserer Annäherung zu erreichen. Trotzdem wird der Sinus nicht stetig mit analogen Mitteln erzeugt, sondern in exakter Weise in dem Impulsgeber bzw. Impulsgenerator 34 digital aufgebaut, um reproduzierbare Größen und Phasenlagen in Abhängigkeit von der Steuerfrequenz bei verhältnismäßig geringem Gesamtaufwand zu erzielen.

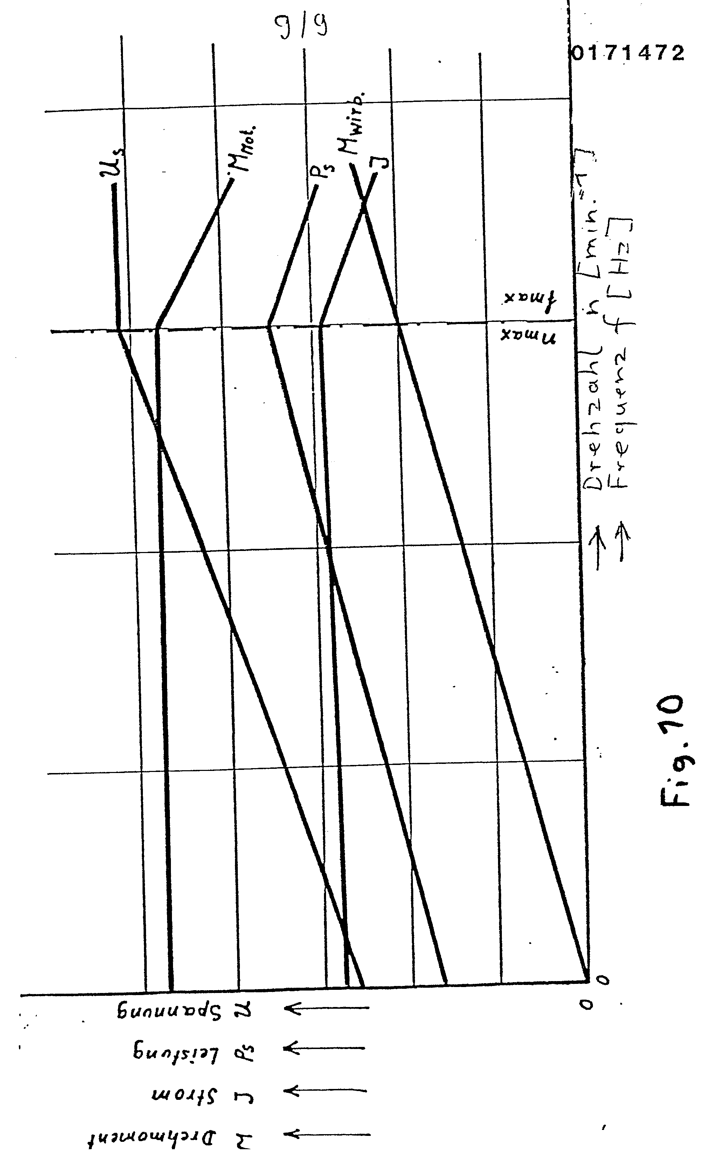

Die in der frequenzabhängigen Steuereinrichtung 35 erzeugte Spannung $U_S$ ist in Figur 10 in Abhängigkeit von der Drehzahl n bzw. von der Steuerfrequenz f dargestellt. Es ist erkennbar, daß die Spannung $U_S$ mit steigender Frequenz bis zu der Frequenz $f_{max.}$ ansteigt, um anschließend konstant zu bleiben. In dem ansteigenden Zweig der Spannung $U_S$ ist der Spulenstrom I annähernd konstant und damit auch das von dem Rotor des Geschwindigkeits- und Wegstreckenmessers erzeugte Drehmoment $M_{Mot}$. Erst über der maximalen Frequenz $f_{max.}$ fällt das Motormoment entsprechend dem sinkenden Strom ab. Bei dem konstanten Motormoment ergibt sich die annähernd linear ansteigende Leistung, die von dem Rotor bis zu der Drehzahl $n_{max.}$ erzeugt wird. Das Drehmoment $M_{wirb.}$ der Wirbelstromglocke nimmt in konventioneller Weise annähernd proportional der Drehzahl n zu. Es ist aus Figur 10 erkennbar, daß das Motordrehmoment $M_{Mot}$ bei kleinen Frequenzen bzw. Drehzahlen keinen unerwünschten Drehmomentüberschuß erzeugt, trotz ausreichenden Motormoments bei höheren Drehzahlen, um eine genauer Wegstreckenmessung zu gewährleisten.

0171472

Patentansprüche

1. Elektrischer Geschwindigkeits- und Wegstreckenmesser für
Fahrzeuge, mit einem Dauermagneten als Rotor, mit einer
den Rotor umfassenden Wirbelstromglocke sowie mit drei
in einem Stator zur Erzeugung eines Drehfeldes angeordneten Spulen, die von einem Impulsgeber mit drei gegeneinander um 120° phasenverschobenen Pulsen mit Fahrzeuggeschwindigkeitabhängiger Frequenz gespeist werden,
d a d u r c h  g e k e n n z e i c h n e t ,
daß bei Sternschaltung der Spulen der Impulsgeber (3-5, 25)
zur Erzeugung von in die Spulen (6-8) eingespeisten treppenförmigen Pulsen eingerichtet ist, die jeweils zwei um 180°
beabstandete Größtwertimpulse entgegengesetzter Polarität
und symmetrisch zu den Größtwertimpulsen Halbwertimpulse
gleicher Polarität wie die Größtwertimpulse aufweisen
(Fig. 5).

2. Elektrischer Geschwindigkeits- und Wegstreckenmesser nach
Anspruch 1,
d a d u r c h  g e k e n n z e i c h n e t ,
daß jedes dem Sternpunkt abgewandte Ende der Spulen (6-8 )
über eine Transistorbrückenschaltung (3, 4, 5) an einen
Pol einer zweipoligen Gleichspannungsquelle anschließbar
ist, derart, daß jeweils zwei der Spulen (z.B. 7, 8) den
halben Strom in umgekehrter Richtung bezogen auf den Strom
in der dritten Spule (z.B. 6) leiten.

3. Elektrischer Geschwindigkeits- und Wegstreckenmesser für
Fahrzeuge nach Anspruch 2,
d a d u r c h  g e k e n n z e i c h n e t ,
daß Steuerimpulse für die Transistorbrückenschaltungen
(3-5) in einer Motorschaltlogikanordnung (25) mit einem
sechsstufigen Ringzähler gebildet werden, der für jeden von einem Getriebeimpulsgeber (1) abgegebenen Weginkrementimpuls um einen Schritt weiterschaltet.

4. Elektrischer Geschwindigkeits- und Wegstreckenmesser für Fahrzeuge, mit einem Dauermagneten als Rotor, mit einer den Rotor umfassenen Wirbelstromglocke sowie mit drei in einem Stator zur Erzeugung eines Drehfeldes angeordneten Spulen, die von einem Impulsgeber mit drei gegeneinander um 120° phasenverschobenen Pulsen mit Fahrzeuggeschwindigkeitabhängiger Frequenz gespeist werden,
d a d u r c h   g e k e n n z e i c h n e t ,
daß der Impulsgeber (34) zur Erzeugung (Synthetisierung) von drei die Spulen beaufschlagenden treppenförmigen Spannungspulsen eingerichtet ist, die eine zu einer Spannung Null symmetrische Sinusform mit 3n Stufen pro 90 Winkelgrad annähern, wobei n eine ganze Zahl ist (Fig. 7).

5. Elektrischer Geschwindigkeits- und Wegstreckenmesser nach Anspruch 4,
d a d u r c h   g e k e n n z e i c h n e t ,
daß der Impulsgeber (34) treppenförmige Spannungspulse erzeugt, welche die Sinusform mit 6 Stufen pro 90 Winkelgrad annähern.

6. Elektrischer Geschwindigkeits- und Wegstreckenmesser nach Anspruch 4,
d a d u r c h   g e k e n n z e i c h n e t ,
daß der Impulsgeber (34) treppenförmige Spannungspulse erzeugt, welche die Sinusform mit 9 Stufen pro 90 Winkelgrad annähern.

57. Elekrischer Geschwindigkeits- und Wegstreckenmesser nach Anspruch 4,

d a d u r c h   g e k e n n z e i c h n e t ,

daß der Impulsgeber (34) treppenförmige Spannungspulse erzeugt, welche die Sinusform mit 12 Stufen pro 90 Winkelgrad annähern.

8. Elektrischer Geschwindigkeits- und Wegstreckenmesser nach Anspruch 4,

d a d u r c h   g e k e n n z e i c h n e t ,

daß der Impulsgeber (34) treppenförmige Spannungspulse erzeugt, welche die Sinusform mit 15 Stufen pro 90 Winkelgrad annähern.

9. Elektrischer Geschwindigkeits- und Wegstreckenmesser mit im Dreieck geschalteten Spulen, nach einem der Ansprüche 4 - 8,

d a d u r c h   g e k e n n z e i c h n e t ,

daß jeder Eckpunkt der Dreieckschaltung über eine durch den Impulsgeber analog ansteuerbare Transistorbrückenschaltung (42 bzw. 43 bzw. 44) mit einer zweipoligen Gleichspannungsquelle entsprechend der treppenförmigen Sinusform beaufschlagbar ist (Fig. 8).

10. Elektrischer Geschwindigkeits- und Wegstreckenmesser nach einem der vorangehenden Ansprüche,

g e k e n n z e i c h n e t   d u r c h

eine Steuereinrichung (35) zur stetigen, vorzugsweise proportionalen Steuerung der Amplitude der Spannungspulse durch die fahrzeuggeschwindigkeitsabhängige Frequenz bis zu einem Höchstwert, ab dem die Amplitude konstant gehalten wird (Fig. 7).

11. Elektrischer Geschwindigkeits- und Wegstreckenmesser nach einem der vorangehenden Ansprüche,
d a d u r c h   g e k e n n z e i c h n e t ,
daß bei Unterbrechungen der Gleichspannungsquelle und/oder der Weginkrementimpulse aktivierbare Mittel (18 - 21) zum rampenförmigen Hochlauf der Pulsfrequenz vorgesehen sind.

12. Elektrischer Geschwindigkeits- und Wegstreckenmesser nach einem der Ansprüche 1 - 9 und 11,
g e k e n n z e i c h n e t   d u r c h
Mittel (32) zur Strombegrenzung der Pulse, die bei Unterschreiten der Weginkrementimpulse unter eine vorgegebene Frequenz (40 Hertz) aktivierbar sind.

13. Elektrischer Geschwindigkeits- und Wegstreckenmesser nach einem der vorangehenden Ansprüche,
d a d u r c h   g e k e n n z e i c h n e t ,
daß die Wirbelstromglocke (9), der Magnet (13) und die Spulen (6 - 8) des Stators von einem Wirbelstromrückschlußring (16) eingeschlossen sind, der im Abstand zu den Spulen und ohne magnetisch leitende Verbindung zu diesen angeordnet ist.

FIG. 1

MOTOR-
SCHALT-
LOGIK

BE 3

BE 4

BE 5

FIG. 2

FIG. 4

FIG. 3

Impuls-former ─17

$f_{weg}$

Vergleich Ramp.-frequenz ─18

Strom-begrenzer ─32

33

Umschalt-logik $f_{weg}/f_{Ramp}$ ─19

18a

24

Motor-schalt-logik ─25

26 ─ 29
27 ─ 30
28 ─ 31

23

$\frac{\Delta U}{\Delta t}$ Detektor

21

f / U - Wandler

20

Endstufen

3-5

$I_1$
$I_2$
$I_3$

Motor 6-8

4 / 9

0171472

FIG. 5

1707

0171472

FIG. 6

24

Impulsgeber — 34

Spannungssteuerung — 35

36
37
38

39
40
41

6-8

42-44 — Endstufen

Fig. 7

Fig. 8

Auflösung:
6
Schritte/90◄

a.

Auflösung:
9
Schritte/90◄

b.

Fig.9

Auflösung:
12
Schritte/90◄

c.

Auflösung:
15
Schritte/90◄

d.

8/9

0171472

Fig. 10

0171472

Nummer der Anmeldung

## Europäisches Patentamt

# EUROPÄISCHER RECHERCHENBERICHT

EP 84 20 1964

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| E | EP-A-0 133 447 (VDO) <br><br> * Ansprüche 1-6; Figuren 1,4-6 * <br><br> --- | 1-3,11 -13 | G 01 P 3/495 |
| Y,D | DE-U-1 610 729 (VDO) <br> * Seite 2, Zeilen 25-41; Figuren * <br><br> --- | 1 | |
| Y | GB-A-2 110 892 (JONES AND CO.) <br> * Seite 2, Zeilen 62-107; Figuren 1A,1B,2B * | 1 | |
| A | | 2,3 | |
| A | US-A-3 176 211 (LINN) <br> * Spalte 1, Zeilen 8-12; Spalte 3, Zeilen 22-73; Figuren 1,3 * <br><br> --- | 9 | RECHERCHIERTE SACHGEBIETE (Int Cl.4) |
| A | GB-A-2 071 440 (SONY CORP.) <br> * Seite 1, Zeile 129 - Seite 2, Zeile 13; Seite 2, Zeilen 39-43; Figuren 7,10 * <br><br> ----- | 10,12 | G 01 P <br> H 02 P <br> H 02 M |

Der vorliegende Recherchenbericht wurde für alle Patentansprüche erstellt

| Recherchenort <br> DEN HAAG | Abschlußdatum der Recherche <br> 01-11-1985 | Prüfer <br> HANSEN P. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82